Europäisches Patentamt

European Patent Office

Office européen des brevets

(11) Publication number: **0 464 933 A2**

# EUROPEAN PATENT APPLICATION

(21) Application number: **91201660.7**

(22) Date of filing: **27.06.91**

(51) Int. Cl.5: **B29C 49/36**, B29C 49/22,
B29C 49/46

(30) Priority: **02.07.90 NL 9001504**

(43) Date of publication of application:
**08.01.92 Bulletin 92/02**

(84) Designated Contracting States:
**AT BE CH DE DK ES FR GB GR IT LI LU NL SE**

(71) Applicant: **STORK AMSTERDAM B.V.**
**2 Ketelstraat**
**NL-1021 JX Amsterdam(NL)**

(72) Inventor: **Klomp, Jozef Johan Henri**
3, Paltrokstraat
**NL-1911 XM Uitgeest(NL)**
Inventor: **Krakers, Bernardus Antonius**
**Johannes**
42, Koperwiekstraat
**NL-1911 XK Uitgeest(NL)**

(74) Representative: **Iemenschot, Johannes**
**Andreas et al**
**Exterpatent P.O. Box 90649**
**NL-2509 LP The Hague(NL)**

(54) **Device and method for the manufacture of plastic containers, such as bottles, with a wall consisting of several layers.**

(57) A device for blow-moulding plastic containers, such as bottles, with a wall comprising several layers, comprises a co-extrusion unit with a co-extrusion head (22) for the formation of a plastic tube consisting of several layers, at least one mould (31), means for cutting off an end section of said tube repeatedly and placing this end section as a parison in the mould, means (33) for blowing the parison in the mould to a container of the desired shape, and means for removal of the ready container from the mould. Each mould (31), the means (33) belonging to the mould for blowing up the parison in the mould to a container of the desired shape and the means belonging to the mould for removal of the ready container from the mould are combined to a separate moulding unit (24). Several of these moulding units (24) are mounted detachably on a turntable (23), the turntable being disposed in such a way that each moulding unit can move past the co-extrusion head (22) to pick up a parison. The co-extrusion unit is provided with means for blowing sterile air through the tube during moulding of the plastic. Means are present for blowing sterile air over the parison during cutting off and placing of the parison in the mould. The device is accommodated in an essentially closed room (41) which is provided with means (43-45) for introducing sterile air from above.

FIG. 5.

The present invention relates to a device according to the preamble of claim 1 and a method according to the preamble of claim 8.

Systems for the manufacture of plastic bottles by blowing are known. In these systems plastic granules are fed to an extruder and converted in a controlled manner into a kneadable compound with a specific temperature. This compound is pressed through an extrusion head, thus forming a deformable plastic tube. An end section is cut off this tube repeatedly. This end section, in the form of a hollow cylinder, is placed as a parison in a closable mould, the inside wall of which is the shape of the bottle to be blown. The parison is blown up, so that its wall comes to rest against the inside wall of the mould and takes the shape thereof. The mould wall is then cooled, as a result of which the plastic resting against the mould wall hardens. Finally, the shaped bottle is removed from the mould.

The blow-moulding of plastic bottles with a wall comprising several layers is also known. In this case a tube comprising several layers is formed by co-extrusion, from which tube the bottles are formed.

The object of the present invention is to provide a device and a method for the manufacture of plastic containers, such as bottles, by blowing, in which plastic containers with a wall comprising several layers can be manufactured in a continuous high-capacity process, while the containers are completely sterile on the inside.

This object is achieved by a device which is characterised by the characterising part of claim 1, and a method which is characterised by the features of claim 8.

Expedient embodiments of the device and method according to the invention are laid down in the sub-claims.

The invention will be explained in greater detail in the example of an embodiment which follows, with reference to a drawing, in which:

Fig. 1 shows schematically a device for the blow-moulding of plastic containers with a wall comprising three layers;

Fig. 2 shows a top view of the device according to the invention;

Fig. 3 shows a side view of the device according to the invention, on a slightly enlarged scale;

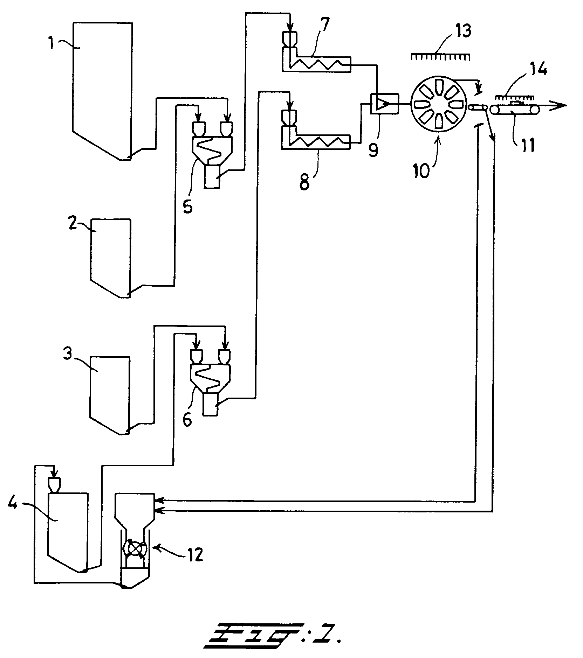

The device shown schematically in Fig. 1 comprises a number of silos 1 to 4, two mixers 5, 6, two extruders 7, 8, an extrusion head 9, a blowing machine 10, a discharge device 11 and a crusher 12.

The material for the containers to be manufactured is stored in the silos 1 to 4. When containers (bottles) with a wall consisting of three layers, i.e. a white inside and outside layer with a black layer between them, are being manufactured, polyethylene granules will be stored in, for example, silo 1, titanium dioxide or white-coloured polyethylene granules in silo 2, carbon black or black-coloured polyethylene granules in silo 3, and crushed production waste in silo 4.

Polyethylene granules from silo 1, which are generally translucent, are mixed in the mixer 5 with titanium dioxide or white-coloured polyethylene granules from silo 2, and the mixture is fed to the extruder 7. Crushed production waste from silo 4 is mixed in silo 6 with carbon black or black-coloured polyethylene granules from silo 3, following which the mixture is fed to the extruder 8.

The granules are converted to a kneadable compound in the two extruders 7, 8. This kneadable compound is pressed through the co-extrusion head 9, in which a plastic tube with a wall consisting of three layers is formed, a white inside and outside layer with a black layer between them.

In the blowing machine 10 disposed after the co-extrusion head 9 containers with walls comprising three layers are blown from the tube coming out of the co-extrusion head 9. The containers formed are discharged by the discharge device 11, for example to a filling device. The containers formed are cooled by means of schematically indicated cooling devices 13 and 14.

Production waste is fed from the blowing machine 10 to the crusher 12, where it is processed to granules, which are then fed to the silo 4.

The containers (bottles) thus formed are white on the inside and outside, and their walls are lightproof due to the presence of the black intermediate layer. The containers are particularly suitable as a pack for milk products. The three layers together give the desired strength to the container and ensure the desired resistance to bacteria.

It is also possible through co-extrusion and blowing to manufacture containers with a wall consisting of more than three layers, for example containers with a plastic inside and outside layer and a gastight plastic intermediate layer, while another adhesive layer is present at both sides of the gastight intermediate layer, in order to bond the intermediate layer to the inside and outside layers. Such containers with a wall comprising five layers are used for, for example, the packaging of fruit juices.

The device shown schematically in Fig. 1 is known per se.

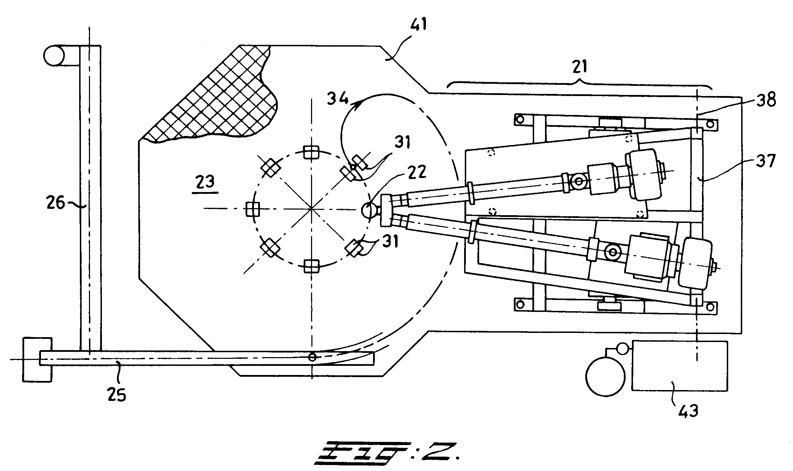

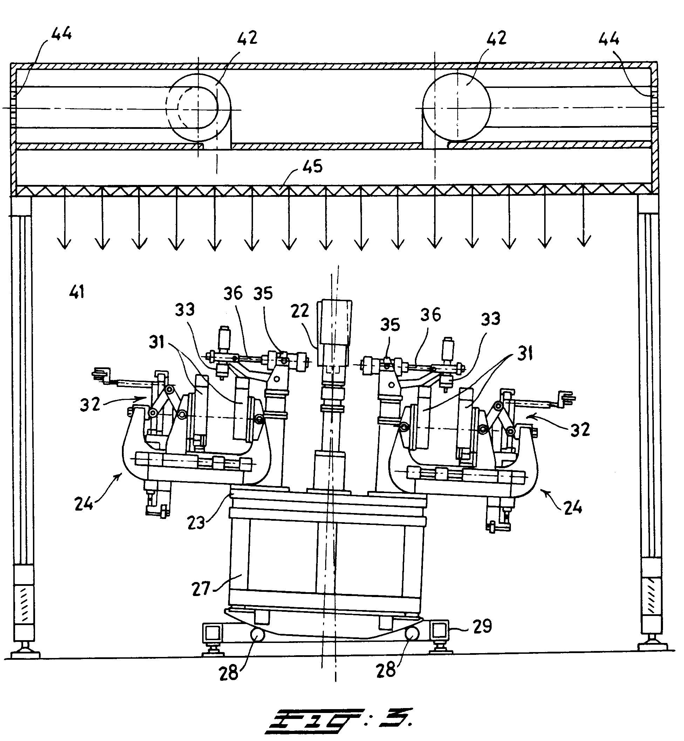

Figs. 2 and 3 show the device according to the invention which forms part of the device shown in Fig. 1. The device according to the invention comprises a co-extrusion unit 21 with a co-extrusion head 22, a turntable 23 which is essentially rotatable about a vertical shaft, and on which a number of individual moulding units 24 are detachably mounted, a removal and inspection conveyor 25, and a cooling conveyor 26. The turntable 23 is disposed in such a way that each moulding unit 24 can move past the co-extrusion head 22.

Each moulding unit 24 comprises two mould halves 31, which in the closed state enclose a mould cavity, the wall of which is the shape of the container to be formed, means 32 for moving the mould halves 31 apart and together and for holding them pressed against each other with force during the blowing of a container, a blowing head 33, valves (not shown) for regulating the air feed and discharge to and from the blowing head, and a removal arm (not shown) for removing a finished container from the mould and placing it on the removal and inspection conveyor 25.

Briefly, the device works as follows.

The open mould halves 31 of a moulding unit 24 are placed around an end section of the tube coming out of co-extrusion head 22 and are then closed. In the process, the bottom side of this end section of the tube is cut off by the mould halves 31 and simultaneously pinched shut, and the end section of the tube is cut off at the top side by a cutter moving past the co-extrusion head 22. A blow hole is thereby formed at the top side of the parison thus formed. The parison is thus the shape of a hollow cylinder which is closed at the bottom side and open at the top side. The turntable 23 turns further, and the blowing head 33 of the moulding unit 24 is placed on the blow hole of the parison. Air is then blown through the blowing head 33 into the parison, as a result of which the parison is blown up and pressed against the wall of the mould cavity of the mould. The mould is then cooled, so that the wall of the container formed hardens. After blowing and cooling of the container, the above-mentioned valves, which are connected to the air channel leading to the blowing head 33, ensure that the pressure in the container formed is released and a controlled vacuum is then created in the container. The blow hole is preferably hermetically sealed by pinching together the wall parts of the container surrounding the blow hole, preferably when the not yet cooled wall parts are still in thermoplastic state, so that for sealing the blow hole additional heating is not necessary. Finally, the mould is opened again and the removal arm takes the ready container out of the mould and places it on the conveyor 25, as shown in Fig. 2 by arrow 34.

The operations described above take place while the turntable 23 is turning continuously.

Due to the fact that each moulding unit 24 is designed as a separate unit and is mounted detachably on the turntable 23, the device according to the invention is very flexible. Different containers can be blown by fitting different moulding units 24 on the turntable 23. The moulding units 24 can be changed quickly. The pipes connected to the moulding units 24 must be connected to a central feed unit.

The turntable 23 is designed in such a way that each moulding unit 24 can be fitted in any desired angular position on the turntable 23. The turntable 23 is therefore preferably round. From the rotation of the turntable 23 it is possible to derive a signal which indicates the orientation of the turntable, and thus the position of each moulding unit 24. This signal can be used for controlling various functions, for example closing mould, blowing, unloading, applying vacuum, opening mould, removing bottle. As a result of this provision, a desired number of moulding units 24, possibly for different types of bottles, can be placed on the turntable 23.

Each moulding unit 24 can be placed slightly slanting on the turntable 23. This is important in the case of higher capacities, thus at higher speeds of the moulding unit 24 relative to the extrusion head 22. When the mould closes, the bottom side of the tube coming out of the extrusion head 22 will be clamped first before the top side is clamped. Placing each moulding unit and thus each mould sloping slightly backwards on the turntable 23, viewed in the direction of rotation of the turntable 23, means that the top side of the parison formed from the tube is also clamped centrally in the mould, but at a slightly later stage than the bottom side. Instead of placing the moulding unit 24 slanting on the turntable 23, it is also possible to place the turntable 23 with the moulding units 24 on it as a whole slanting relative to the vertical, in such a way that at the place where the moulding units 24 pass the extrusion head 22 the moulds slope backward slightly, viewed in the direction of rotation of the turntable 23. This means that all moulding units can be placed in the desired slanting position in one go, as indicated in Fig. 3. In the embodiment shown in Fig. 3 the turntable 23 is mounted on an underframe 27 resting by means of rollers 28 on a base 29.

Each moulding unit 24 is constructed and placed on the turntable 23 in such a way that the movement of the movable parts of each moulding unit takes place essentially in the radial direction of the turntable 23. The moulding units 24 can therefore be made relatively narrow, so that as many moulding units 24 as possible can be placed on the periphery of the turntable 23. As can be seen in Fig. 3, one of the mould halves 31 is movable by the devices 32 in the radial direction of the turntable 23. The blowing head 33 is fixed to an arm 36 which can be swivelled in a vertical radial plane about a hinge point 35.

In order to achieve a further capacity increase, the co-extrusion unit 21, and in particular the co-extrusion head 22, is movable in the vertical direction relative to the moulding units 24, in particular the moulds, in such a way that after cutting off of the parison from the tube coming out of the co-extrusion head 22 the co-extrusion unit 21 is moved up and then moved down again shortly after the passing of a mould, so that the co-extrusion unit 21 is at the original height again during the filling of the next mould with a parison.

The reason for this vertical movability of the co-extrusion unit 21 is that the tube streams continuously out of the co-extrusion head 22. If the parison is cut off, the bottom side of the tube can be carried along by the mould just filled.

In order to make the co-extrusion unit 21 movable in the vertical direction, this unit 21 is fitted on a frame 37 which is movable in the vertical direction (see Fig. 2). The frame 37 can be movable as a whole in the vertical direction, but it is also possible to make the frame pivot about a horizontal axis 38 which is situated at the side of the frame 37 away from the turntable 23. The frame 37 can be moved in the vertical direction by any known device, such as a hydraulic cylinder and the like.

With the device described above it is possible to make containers with a wall comprising several layers continuously at high capacity.

A number of measures are taken in order to make containers which are completely sterile, also on the inside.

The containers are made of a plastic which has such a processing temperature that during the formation of the plastic tube all bacteria present in the plastic are destroyed. In particular, the plastic used is polyethylene (HDPE) which has a processing temperature of 200 to 220˚C.

During the formation of the plastic tube sterile air is blown through the tube. The co-extrusion unit 21, and in particular the co-extrusion head 22, is to this end provided with means for blowing in sterile air.

During cutting off and placing of the parison in a mould sterile air is blown over the parison at a rate of, for example, 0.4 - 0.5 m/sec. Suitable means are present for this. The parison is blown up in the mould with particularly sterile air.

The sterile air is obtained by conveying air through a number of filters, first through a number of dust filters placed in series, which range from coarse to fine, and by means of which coarse dust particles are removed from the air first, and a bacteria filter by means of which any bacteria still present are removed from the air.

Before the start of production the device - and in particular the channels and filters through which the sterile air is fed in - is pre-sterilised, preferably using an atomized disinfectant, in particular hydrogen peroxide.

The whole device is accommodated in an essentially closed room 41. Fans 42 which blow sterile air into the room 41 are fitted at the top side of room 41. This air comes from a pre-sterilisation system and an air filtering unit, which is indicated by reference number 43 in Fig. 2. Before the air goes into the fans 41, it passes through the filters 44. The air blown out by the fan 42 is also conveyed through a filter 45 fitted in the top of the room 41, as a result of which in the end sterile air reaches the room 41. It is also ensured that the incoming stream of air is essentially laminar.

In order to keep the containers sterile on the inside after blowing, the blow hole can be hermetically sealed after blowing and cooling of the container by pinching together the wall parts surrounding the blow hole.

With the above-mentioned method and device a hermetically sealed lightproof container which is completely sterile - also on the inside - can be obtained, which container can be mass-produced continuously and is ready to be used in an aseptic filling machine.

## Claims

1. Device for blow-moulding plastic containers, such as bottles, with a wall comprising several layers, comprising a co-extrusion unit (21) with a co-extrusion head (22) for the formation of a plastic tube consisting of several layers, at least one mould (31), means for cutting off an end section of said tube repeatedly and placing this end section as a parison in the mould, means (33) for blowing the parison in the mould to a container of the desired shape, and means for removal of the ready container from the mould, **characterised in that** each mould (31), the means (33) belonging to the mould for blowing up the parison in the mould to a container of the desired shape and the means belonging to the mould for removal of the ready container from the mould are combined to a separate moulding unit (24), and in that several of these moulding units (24) are mounted detachably on a turntable (23), the turntable being disposed in such a way that each moulding unit can move past the co-extrusion head (22) to pick up a parison.

2. Device according to claim 1, **characterised in that** the turntable (23) is designed in such a way that each moulding unit (24) can be mounted in any desired angular position on the turntable.

3. Device according to claim 1 or 2, **characterised in that** the turntable (23) is disposed horizontally, and in that each moulding unit (24) is placed on the turntable in such a way that each mould (31) slopes slightly backward, viewed in the direction of rotation of the turntable, or that the turntable (23) with the moulding units (24) fitted on it is disposed as a whole slanting, in such a way that at the place where the moulding units pass the extrusion head (22) the moulds slope backward slightly, viewed in the direction of rotation of the turntable.

4. Device according to any of claims 1 - 3, **characterised in that** each moulding unit (24) is constructed and placed on the turntable (23) in such a way that the movement of the movable parts (32, 36) of each moulding unit takes place essentially in the radial direction of the turntable.

5. Device according to any of claims 1 - 4, **characterised in that** the co-extrusion unit (21) is movable in the vertical direction relative to the moulds (31), preferably by being mounted on a frame (37) which is movable in the vertical direction, the frame preferably being pivotable about a horizontal axis (38) which is situated at the side of the frame (37) away from the moulds (31).

6. Device according to any of claims 1 - 5, **characterised in that** the co-extrusion unit (21) is provided with means for blowing sterile air through the tube during moulding of the plastic, and in that means are present for blowing sterile air over the parison during cutting off and placing of the parison in the mould, and that preferably the device is also provided with means for supplying sterile air, comprising a number of dust filters placed in series and ranging from coarse to fine, and a bacteria filter through which air for the sterilising can be conveyed.

7. Device according to any of claims 1 - 6, **characterised in that** the device is accommodated in an essentially closed room (41) which is provided with means (43-45) for introducing sterile air from above.

8. Method for the blow-moulding of plastic containers, such as bottles, with a wall comprising several layers, in which a plastic tube consisting of several layers is formed by co-extrusion, an end section of said tube is cut off repeatedly and placed as a parison in a mould, and the parison is blown up in the mould to a container of the desired shape, **characterised in that** the material used for the containers is a plastic which has such a processing temperature that during the formation of the plastic tube all bacteria present on or in the plastic are destroyed, during the formation of the tube sterile air is blown through the tube, during the cutting off and placing in the mould of the parison sterile air is blown over the parison, and the parison is blown up with sterile air.

9. Method according to claim 8, **characterised in that** the means through which sterile air is supplied - are pre-sterilised before use, preferably with an atomized disinfectant, preferably hydrogen peroxide.

10. Method according to claim 8, **characterised in that** the container formed is hermetically sealed after blowing, preferably when the wall parts of the container surrounding the blow hole are still in thermoplastic state.

FIG:1.

Fig. 2.

FIG. 3.